# EUROPEAN PATENT SPECIFICATION

(11) **EP 2 062 766 B1**
(45) Date of publication and mention of the grant of the patent: **14.07.2010**
(21) Application number: 07121510.7
(22) Date of filing: 26.11.2007
(51) Int. Cl.: B60J 1/20

(54) **Sunscreen assembly with two sunscreens**
Sonnenschutzanordnung mit zwei Vorhängen
Ensemble écran solaire avec deux écrans

(43) Date of publication of application: 27.05.2009
(73) Proprietor: Inalfa Roof Systems Group B.V., 5804 AH Venray (NL)
(72) Inventor: Denissen, Louisa Catharina Petronella, 5821 BN, Vierlingsbeek (NL)
(74) Representative: Metman, Karel Johannes

(56) References cited:
- EP-A- 0 362 923
- EP-A- 0 735 229
- US-A1- 2004 262 453

## Description

The invention relates to a sunscreen assembly comprising two sunscreens each having a first end which can be wound off or on a winding shaft for covering and freeing, respectively, an opening, wherein each winding shaft is pre-loaded for winding on the respective sunscreen, the assembly further comprising driving means for winding off the sunscreens. A relevant unit is known from EP 0 735 229 A1.

A state of the art sunscreen assembly of the above mentioned type comprises two driving means (generally electric motors) for separately driving the two sunscreens, see, e.g. US 2004/0262453 A1. It will be clear that the use of two driving means (one for each sunscreen) adds to the cost, weight and dimensions of the sunscreen assembly. The dimensions, particularly, are a problem when such a sunscreen assembly with two sunscreens is part of an open roof construction of a vehicle which has to be mounted in a reduced space in the roof of the vehicle.

It is noted that within the context of the present invention the meaning of "sunscreen" should not be taken too literally. Such a "sunscreen" also may comprise a gauze screen or alike (as may be the case, for example, in trucks comprising a first rollo for a sunscreen and a second rollo for a gauze screen).

In view of the disadvantages of the state of the art sunscreen assembly of the type referred to above it is an object of the present invention to provide an improved sunscreen assembly.

Thus, in accordance with the present invention, a sunscreen assembly is provided in which the winding shafts are positioned at opposite sides of the opening and wherein a single driving means is provided which, when operated in a first sense, is capable of winding off one of said sunscreens from its assigned winding shaft while the other sunscreen remains in its fully wound on position, and which, when operated in a second sense, is capable of winding off the other of said sunscreens from its assigned winding shaft while the one sunscreen remains in its fully wound on position.

As a result of using only one driving means for driving both sunscreens the cost, weight and dimensions of the sunscreen assembly may be limited while maintaining the required functionality of the assembly.

In a preferred embodiment of the sunscreen assembly according to the present invention the driving means is devised for engaging each sunscreen at a second free end thereof opposite its first end. For example, the driving means may engage a pull beam provided at said second free end of each sunscreen. Such a pull beam (which, generally, with its opposite ends is guided in guides extending along opposite sides of the opening) is known per se and normally is used for manually moving the free end of the sunscreen.

Still further it is possible that the driving means comprises at least one engagement member for engaging a respective sunscreen, which engagement member is arranged for moving along an endless track of which at least a part extends in parallel to the direction of movement of the second free end of the sunscreens. For example, such engagement member may engage the pull beam mentioned above for moving the respective sunscreen in a direction for winding it off the winding shaft and for at least partially covering the opening. The other sunscreen, then, remains in its fully wound on position (totally freeing the opening) which, generally will be defined by stop means (for example stop means cooperating with the pull beam). When, as mentioned previously, a pull beam is applied moving along guides, the mentioned part of the endless track will extend in parallel to said guides (which determine the direction of movement of the free end of the sunscreens). When the driving means is operated in a first sense the engagement member will arrive at a first end of said track part for engaging one of the sunscreens. When, however, the driving means is operated in a second, opposite, sense the engagement member will arrive at a second end of said track part for engaging the other of the sunscreens.

Constructively it is possible that the endless track is oblong-shaped and is defined by a driving belt extending around two reversal rollers. The oblong shape defines two generally straight sections of the driving belt, one of which defines the above mentioned part of the track in parallel to the direction of movement of the second free end of the sunscreens.

Although the sunscreen assembly already is capable of driving both sunscreens separately with only one engagement member, according to another embodiment the driving means comprises two engagement members, each for engaging a different one of the sunscreens. This offers the possibility of positioning the engagement members such on the driving means that operation of the driving means in either sense will immediately lead to a corresponding movement of the respective sunscreen without the need of moving a single engagement member firstly towards the sunscreen that has to be moved (wound off). Particularly this could mean that in their fully wound on position both sunscreens are engaged by one of said engagement members, and that operating the driving means in one sense will lead to winding off one sunscreen by means of its respective engagement member whereas the other engagement member disengages (moves away from) the other sunscreen.

When the driving means is provided with two driving belts at opposite sides of the sunscreens and operatively connected, a symmetrical load on the sunscreens occurs which is favourable for a smooth movement thereof.

In such a case it is possible that a single electric motor is provided for synchronously driving both driving belts. For example, each driving belt may comprise a toothed belt wherein the reversal rollers are sprockets, and wherein one of the sprockets of each driving belt is driven by the electric motor.

Hereinafter the invention will be elucidated while referring to the drawing, in which
Figure 1 shows, partly and perspectively, an exploded view of an embodiment of the sunscreen assembly according to the present invention, and
Figure 2 shows, schematically, different operational positions of the sunscreen assembly of figure 1.

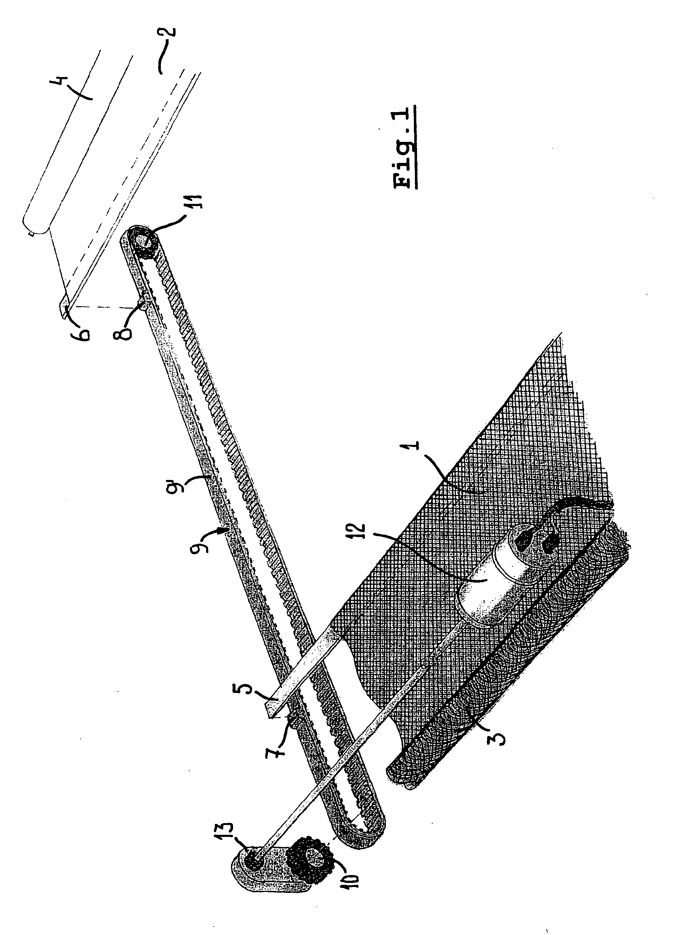

Firstly referring to figure 1 a sunscreen assembly is shown comprising two sunscreens 1 and 2. Each sunscreen 1 and 2 has a first end which can be wound off or on a winding shaft 3 and 4, respectively, for covering and freeing, respectively, an opening (not shown; for example this may be a roof opening in a vehicle).

Said winding shafts 3,4, in a manner not shown but known per se, are pre-loaded for winding on the respective sunscreens and are positioned at opposite sides of the opening to be covered or freed.

Each sunscreen has a second free end (opposite the first end) provided with a pull beam 5 and 6, respectively. Each pull beam 5,6 has opposite ends which, in a manner not shown in detail but well-known, are guided in guides (not illustrated) positioned at opposite sides of the sunscreens 1,2 (and, thus, at opposite sides of the above-mentioned opening).

The sunscreen assembly further comprises a single driving means for winding off the sunscreens 1,2 against the pre-load of the winding shafts 3,4. The driving means is devised such that, when operated in a first sense, it is capable of winding off one of said sunscreens 1,2 from its assigned winding shaft 3,4 while the other sunscreen 2,1 remains in its fully wound on position and, when operated in a second sense, it is capable of winding off the other of said sunscreens 2,1 from its assigned winding shaft 4,3 while the one sunscreen 1,2 remains in its fully wound on position.

In the illustrated embodiment the driving means is devised for engaging the pull beam 5,6 provided at said second free end of each sunscreen.

The driving means comprises two engagement members 7 and 8 for engaging a respective pull beam 5 and 6, respectively. These engagement members 7 and 8 are arranged for moving along an endless track defined by a driving belt 9 of which at least a part 9' extends in parallel to the direction of movement of the second free end (pull beam) of the sunscreens. Thus, the engagement members 7,8 are attached to said driving belt 9.

The endless track as defined by the driving belt 9 is oblong-shaped and is defined by the driving belt 9 extending around two reversal rollers 10 and 11.

It is noted that figure 1 only shows part of the sunscreen assembly, and that generally the driving means is provided with two driving belts 9 at opposite sides of the sunscreens 1,2 and operatively connected, for example by an electric motor 12 which is provided for synchronously driving both driving belts.

In the illustrated embodiment the driving belt 9 is a toothed belt and the reversal rollers 10 and 11 are sprockets, wherein one of the sprockets 10 of each driving belt 9 is driven by the electric motor 12 (in this case through a gear box 13 positioned between the electric motor 12 and the driven sprocket 10).

The other sprocket 11 may be movable towards the driven sprocket 10 against a pre-load, for example a pre-load of a spring member (not illustrated) for maintaining the desired tension in the sunscreen assembly.

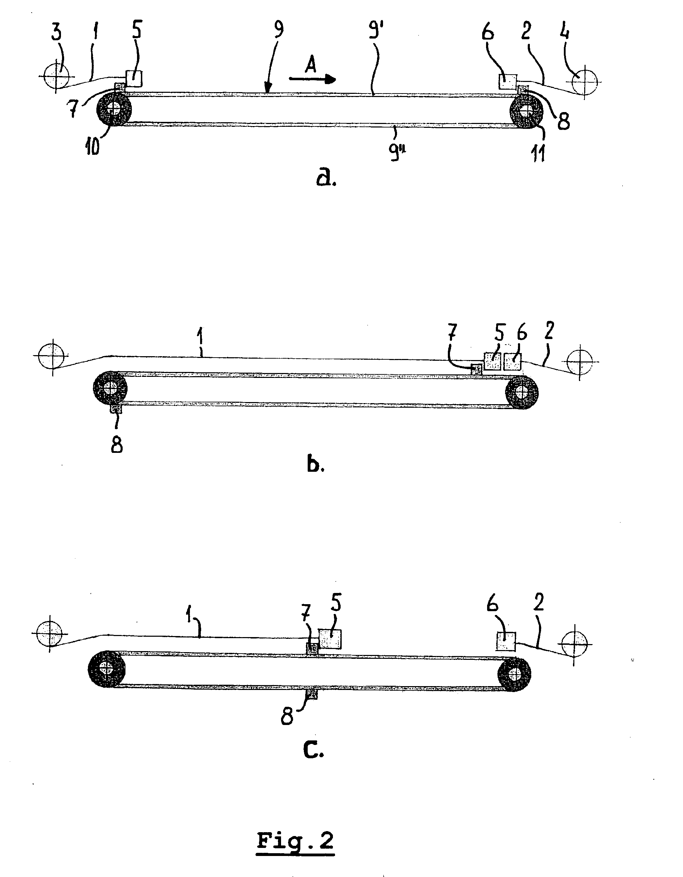

Figure 2a shows the sunscreen assembly in a first position, in which both sunscreens 1,2 are fully wound on the assigned winding shafts 3,4. In this embodiment both engagement members 7 and 8 engage the corresponding parts 5 and 6 (pull beams) of the sunscreens 1 and 2.

Activating the driving belt in a first sense (arrow A) will cause the engagement member 7 to push the pull beam 5 of sunscreen 1 to the right, thus unwinding the sunscreen 1 from its winding shaft 3. Eventually, a position of the sunscreen 1 is reached (figure 2b) in which it fully covers the opening (not shown). The other sunscreen 2 with its pull beam 6 remains in the starting position (which, for example, may be defined by stop members not illustrated cooperating with the pull beam 6). The engagement member 8 has moved away from the pull beam 6, as illustrated in figure 2b.

Figure 2c shows a position in which the sunscreen 1 only partially covers the opening.

When, starting from the positions shown in figure 2b or 2c, the driving belt is activated in the opposite sense (opposite arrow A in figure 2a), the sunscreen 1 will be wound on its winding shaft 3 again (as a result of the pre-load thereof) until reaching its position illustrated in figure 2a.

Activating the driving belt 9 in the opposite sense (starting from the position illustrated in figure 2a) will lead to a corresponding, yet opposite, movement of sunscreen 2 while sunscreen 1 remains stationary.

It is noted that it is possible too to provide only one engagement member, for example engagement member 7. However, then this engagement member 7 first has to run along the lower part 9" of the driving belt (starting from the position according to figure 2a) when it is desired to move sunscreen 2 in a direction for winding it off from the winding shaft 4.

The invention is not limited to the embodiments described before, which may be varied widely within the scope of the invention as defined by the appending claims.

## Claims

1. Sunscreen assembly comprising two sunscreens (1,2) each having a first end which can be wound off or on a winding shaft (3,4) for covering and freeing, respectively, an opening, wherein each winding shaft (3,4) is pre-loaded for winding on the respective sunscreen (1,2), the assembly further comprising driving means for winding off the sunscreens, **characterized in that** the winding shafts (3,4) are positioned at opposite sides of the opening and that a single driving means (9) is provided which, when operated in a first sense, is capable of winding off one of said sunscreens (1) from its assigned winding shaft (3) while the other sunscreen (2) remains in its fully wound on position, and which, when operated in a second sense, is capable of winding off the other (2) of said sunscreens from its assigned winding shaft (4) while the one sunscreen (1) remains in its fully wound on position.

2. Sunscreen assembly according to claim 1, wherein the driving means (9) is devised for engaging each sunscreen (1,2) at a second free end thereof opposite its first end.

3. Sunscreen assembly according to claim 2, wherein the driving means engages a pull beam (5,6) provided at said second free end of each sunscreen (1,2).

4. Sunscreen assembly according to claim 2 or 3, wherein the driving means (9) comprises at least one engagement member (7,8) for engaging a respective sunscreen (1,2), which engagement member (7,8) is arranged for moving along an endless track of which at least a part (9') extends in parallel to the direction of movement of the second free end of the sunscreens (1,2).

5. Sunscreen assembly according to claim 4, wherein the endless track is oblong-shaped and is defined by a driving belt (9) extending around two reversal rollers (10,11).

6. Sunscreen assembly according to claim 4 or 5, wherein the driving means (9) comprises two engagement members (7,8), each for engaging a different one of the sunscreens (1,2).

7. Sunscreen assembly according to claim 5, wherein the driving means is provided with two driving belts (9) at opposite sides of the sunscreens and operatively connected.

8. Sunscreen assembly according to claim 7, wherein a single electric motor (12) is provided for synchronously driving both driving belts (9).

9. Sunscreen assembly according to claim 8, wherein each driving belt is a toothed belt and wherein the reversal rollers (10,11) are sprockets, and wherein one of the sprockets of each driving belt (9) is driven by the electric motor (12).

10. Sunscreen assembly according to claim 9, wherein a gear box (13) is positioned between the electric motor (12) and the driven sprocket.

11. Sunscreen assembly according to claim 9 or 10, wherein the other sprocket (11) is movable towards the driven sprocket (10) against a pre-load, for example a pre-load of a spring member.

## Patentansprüche

1. Sonnenabschirmeinrichtung, die zwei Sonnenabschirmungen (1, 2) aufweist, die jeweils aufweisen: ein erstes Ende, das von einer Wickelwelle (3, 4) abgewickelt oder auf diese aufgewickelt werden kann, um eine Öffnung zu bedecken beziehungsweise freizugeben, wobei jede Wickelwelle (3, 4) zum Aufwickeln der jeweiligen Sonnenabschirmung (1, 2) vorgespannt ist, wobei die Einrichtung ferner Antriebsmittel zum Abwickeln der Sonnenabschirmungen aufweist, **dadurch gekennzeichnet, dass** die Wickelwellen (3, 4) an gegenüberliegenden Seiten der Öffnung positioniert sind und dass ein einziges Antriebsmittel (9) vorgesehen ist, das, wenn es in einer ersten Richtung betrieben wird, geeignet ist, eine der Sonnenabschirmungen (1) von ihrer zugeordneten Wickelwelle (3) abzuwickeln, während die andere Sonnenabschirmung (2) in ihrer vollständigen Aufwickelposition bleibt, und das, wenn es in einer zweiten Richtung betrieben wird, geeignet ist, die andere (2) der Sonnenabschirmungen von ihrer zugeordneten Wickelwelle (4) abzuwickeln, während die eine Sonnenabschirmung (1) in ihrer vollständigen Aufwickelposition bleibt.

2. Sonnenabschirmeinrichtung gemäß Anspruch 1, wobei das Antriebsmittel (9) vorgesehen ist, an jeder Sonnenabschirmung (1, 2) an einem zweiten freien Ende davon entgegengesetzt zu ihrem ersten Ende anzugreifen.

3. Sonnenabschirmeinrichtung gemäß Anspruch 2, wobei das Antriebsmittel an einem Zugträger (5, 6) angreift der an dem zweiten freien Ende jeder Sonnenabschirmung (1, 2) vorgesehen ist.

4. Sonnenabschirmeinrichtung gemäß Anspruch 2 oder 3, wobei das Antriebsmittel (9) mindestens ein Eingriffsmittel (7, 8) zum Angreifen an einer jeweiligen Sonnenabschirmung (1, 2) aufweist, wobei das Eingriffsmittel (7, 8) angeordnet ist, um sich entlang einer Endlosbahn zu bewegen, von der sich zumindest ein Teil (9') parallel zu der Bewegungsrichtung des zweiten freien Endes der Sonnenabschirmungen (1, 2) erstreckt.

5. Sonnenabschirmeinrichtung gemäß Anspruch 4, wobei die Endlosbahn länglich geformt ist und von einen Antriebsriemen (9) definiert wird, der sich um zwei Umlenkrollen (10, 11) herum erstreckt.

6. Sonnenabschirmeinrichtung gemäß Anspruch 4 oder 5, wobei das Antriebsmittel (9) zwei Eingriffselemente (7, 8) aufweist, um jeweils an einer anderen der Sonnenabschirmungen (1, 2) anzugreifen.

7. Sonnenabschirmeinrichtung gemäß Anspruch 5, wobei das Antriebsmittel mit zwei Antriebsriemen (9) versehen ist, die an entgegengesetzten Seiten der Sonnenabschirmungen vorgesehen und operativ miteinander verbunden sind.

8. Sonnenabschirmeinrichtung gemäß Anspruch 7, wobei ein einziger Elektromotor (12) zum synchronen Antreiben beider Antriebsgurte (9) vorgesehen ist.

9. Sonnenabschirmeinrichtung gemäß Anspruch 8, wobei jeder Antriebsriemen ein Zahnriemen ist und wobei die Umlenkrollen (10, 11) Kettenräder sind, und wobei eines der Kettenräder jedes Antriebsriemens (9) von dem Elektromotor (12) angetrieben wird.

10. Sonnenabschirmeinrichtung gemäß Anspruch 9, wobei ein Getriebe (13) zwischen dem Elektromotor (12) und dem angetriebenen Kettenrad positioniert ist.

11. Sonnenabschirmeinrichtung gemäß Anspruch 9 oder 10, wobei das andere Kettenrad (11) gegen eine Vorspannung, zum Beispiel eine Vorspannung eines Federelements, in Richtung des angetriebenen Kettenrades (10) bewegbar ist.

## Revendications

1. Ensemble d'écrans pare-soleil comprenant deux écrans pare-soleil (1, 2) possédant chacun une première extrémité qui peut être déroulée d'une tige d'enroulement (3, 4) ou enroulée sur cette dernière pour recouvrir et libérer, respectivement, une ouverture, dans lequel chaque tige d'enroulement (3, 4) est pré-chargée pour enrouler l'écran pare-soleil respectif (1, 2), l'ensemble comprenant en outre un moyen d'entraînement pour dérouler les écrans pare-soleil, **caractérisé en ce que** les tiges d'enroulement (3, 4) sont positionnées sur des côtés opposés de l'ouverture et qu'un seul moyen d'entraînement (9) est prévu qui, lorsqu'il est mis en fonctionnement dans un premier sens, est capable de dérouler un premier desdits écrans pare-soleil (1) de sa tige d'enroulement attribuée (3) alors que l'autre écran pare-soleil (2) reste dans sa position complètement enroulée, et qui, lorsqu'il est mis en fonctionnement dans un second sens, est capable de dérouler l'autre (2) desdits écrans pare-soleil de sa tige d'enroulement attribuée (4) alors que le premier écran pare-soleil (1) reste dans sa position complètement enroulée.

2. Ensemble d'écrans pare-soleil selon la revendication 1, dans lequel le moyen d'entraînement (9) est conçu pour entrer en prise avec chaque écran pare-soleil (1, 2) à une seconde extrémité libre de celui-ci opposée à sa première extrémité.

3. Ensemble d'écrans pare-soleil selon la revendication 2, dans lequel le moyen d'entraînement entre en prise avec une barre de tirage (5, 6) prévue à ladite seconde extrémité libre de chaque écran pare-soleil (1, 2).

4. Ensemble d'écrans pare-soleil selon la revendication 2 ou 3, dans lequel le moyen d'entraînement (9) comprend au moins un élément d'entrée en prise (7, 8) destiné à entrer en prise avec un écran pare-soleil respectif (1, 2), lequel élément d'entrée en prise (7, 8) est agencé pour se déplacer le long d'une chenille sans fin dont au moins une partie (9') s'étend en parallèle à la direction de mouvement de la seconde extrémité libre des écrans pare-soleil (1, 2).

5. Ensemble d'écrans pare-soleil selon la revendication 4, dans lequel la chenille sans fin est de forme oblongue et est définie par une courroie d'entraînement (9) s'étendant autour de deux rouleaux à changement de sens (10, 11).

6. Ensemble d'écrans pare-soleil selon la revendication 4 ou 5, dans lequel le moyen d'entraînement (9) comprend deux éléments d'entrée en prise (7, 8), chacun destiné à entrer en prise avec un écran pare-soleil différent des écrans pare-soleil (1, 2).

7. Ensemble d'écrans pare-soleil selon la revendication 5, dans lequel le moyen d'entraînement est pourvu de deux courroies d'entraînement (9) sur des côtés opposés des écrans pare-soleil et reliées de façon opérationnelle.

8. Ensemble d'écrans pare-soleil selon la revendication 7, dans lequel un seul moteur électrique (12) est prévu pour entraîner de façon synchrone les deux courroies d'entraînement (9).

9. Ensemble d'écrans pare-soleil selon la revendication 8, dans lequel chaque courroie d'entraînement est une courroie dentée et dans lequel les rouleaux à changement de sens (10, 11) sont des roues dentées, et dans lequel une des roues dentées de chaque courroie d'entraînement (9) est entraînée par le moteur électrique (12).

10. Ensemble d'écrans pare-soleil selon la revendication 9, dans lequel une boîte de vitesse (13) est positionnée entre le moteur électrique (12) et la roue dentée entraînée.

11. Ensemble d'écrans pare-soleil selon la revendication 9 ou 10, dans lequel l'autre roue dentée (11) est mobile vers la roue dentée entraînée (10) contre une pré-charge, par exemple une pré-charge d'un élément de ressort.
